# EUROPÄISCHE PATENTSCHRIFT

(11) **EP 1 046 807 B1**
(45) Veröffentlichungstag und Bekanntmachung des Hinweises auf die Patenterteilung: **30.10.2002**
(21) Anmeldenummer: 00106277.7
(22) Anmeldetag: 23.03.2000
(51) Int. Cl.: F02M 23/04

(54) **Sekundärluftzuführvorrichtung für eine Brennkraftmaschine**
Secondary air supply device for a combustion engine
Dispositif d'alimentation en air secondaire pour un moteur à combustion

(30) Priorität: 20.04.1999 DE 19917739
(43) Veröffentlichungstag der Anmeldung: 25.10.2000
(73) Patentinhaber: TWIN-TEC Entwicklungsgesellschaft für emissionsreduzierende Technologien mbH, 53840 Troisdorf (DE)
(72) Erfinder: Pommer, Fredi Alexander, 42857 Remscheid (DE)
(74) Vertreter: Patentanwälte Hauck, Graalfs, Wehnert, Döring, Siemons, Schildberg

(56) Entgegenhaltungen:
- EP-A- 0 277 578
- DE-A- 4 233 971
- DE-A- 19 645 905
- PATENT ABSTRACTS OF JAPAN vol. 1995, no. 08, 29. September 1995 (1995-09-29) & JP 07 127444 A (MITSUBISHI ELECTRIC CORP), 16. Mai 1995 (1995-05-16)
- PATENT ABSTRACTS OF JAPAN vol. 005, no. 080 (M-070), 26. Mai 1981 (1981-05-26) & JP 56 029048 A (HONDA MOTOR CO LTD), 23. März 1981 (1981-03-23)
- PATENT ABSTRACTS OF JAPAN vol. 006, no. 117 (M-139), 30. Juni 1982 (1982-06-30) & JP 57 046044 A (TOYOTA MOTOR CORP), 16. März 1982 (1982-03-16)

## Beschreibung

Die vorliegende Erfindung betrifft eine Vorrichtung zur Zuführung von Sekundärluft in den Ansaugkanal einer Brennkraftmaschine, die eine über eine Lambda-Sonde geregelte Kraftstoffzuführung und einen Katalysator zur Abgasreinigung aufweist.

Im Abgas von Brennkraftmaschinen sind auch bei Verbrennung mit Kraftstoffüberschuß noch Restsauerstoffanteile vorhanden. Der Restsauerstoffgehalt ist im starken Maße von der Zusammensetzung des Luft-Kraftstoff-Gemisches abhängig, das dem Motor zur Verbrennung zugeführt wird. Diese Abhängigkeit ermöglicht es, den Sauerstoffanteil im Abgas als Maß für das Luft-Kraftstoff-Verhältnis Lambda heranzuziehen.

Hierzu finden sogenannte Lambda-Sonden Verwendung, die mit dem Abgas in Kontakt stehen. Das Ausgangssignal der Sonde wird als Istwert einem Steuergerät zugeführt, das das Luft-Kraftstoff-Gemisch entsprechend regelt.

Mit Hilfe eines Lambda-Regelkreises wird eine Genauigkeit in der Gemischzusammensetzung erreicht, die zum wirkungsvollen Betrieb von Abgaskatalysatoren zur Abgasreinigung erforderlich ist. Derartige "geregelte Katalysatoren" bewirken über Oxidations/Reduktionsreaktionen eine entsprechende Entgiftung der Abgase in erster Linie von CO, NOx und Kohlenwasserstoffen.

Es ist bekannt, daß derartige Abgasreinigungssysteme (bestehend aus einem Lambda-Regelkreis mit zugehörigem Katalysator) erst ab einer bestimmten Wirkungstemperatur (Abgastemperatur von ca. 250-350 °C) funktionieren. Unterhalb dieses Temperaturbereiches, d.h. im kalten Zustand einer Brennkraftmaschine, findet keine Abgasentgiftung statt. Dies ist besonders nachteilig im städtischen Kurzstreckenverkehr, da es gerade in diesen Fällen auf eine effiziente Abgasentgiftung ankommt.

Um die Effizienz derartiger Abgasreinigungssysteme bei Kaltlauf zu verbessern, ist es bekannt, entsprechende Heizeinrichtungen vorzusehen. Dies ist jedoch aufwendig und mit zusätzlichen Kosten verbunden.

Der Erfindung liegt die Aufgabe zugrunde, eine Vorrichtung zu schaffen, mit der das Abgas von Brennkraftmaschinen im Kaltlauf der Brennkraftmaschine, d.h. unterhalb der Wirkungstemperatur von Lambda-Sonde und Katalysator, gereinigt bzw. entgiftet wird.

Diese Aufgabe wird erfindungsgemäß durch eine Vorrichtung zur Zuführung von Sekundärluft in den Ansaugkanal einer Brennkraftmaschine, die eine über eine Lambda-Sonde geregelte Kraftstoffzuführung und einen Katalysator zur Abgasreinigung aufweist, gelöst, mit
einer im Ansaugkanal der Brennkraftmaschine angeordneten Düse zur Sekundärlufteinführung,
einem Sekundärluftmengenregler, der eine mit der Atmosphäre und der Sekundärlufteinführdüse in Verbindung stehende Sekundärluftkammer aufweist, deren Durchtrittsquerschnitt über ein vom Unterdruck im Ansaugkanal beaufschlagtes Steuerelement gesteuert wird, und
einer die Sekundärluftzufuhr zum Ansaugkanal bei Beginn der Betriebsphase von Lambda-Sonde und Katalysator sperrenden Einrichtung.

Mit der erfindungsgemäß ausgebildeten Vorrichtung ist es möglich, außerhalb der Betriebsphase von Lambda-Sonde und Katalysator eine Abgasreinigung bzw. Abgasentgiftung durchzuführen. Eine Abgasreinigung gerade in dieser Kaltphase des Motorlaufs ist besonders wichtig, da beim Kaltstart einer Brennkraftmaschine das Luft-Kraftstoff-Gemisch wegen der Verluste an den kalten Wänden des Ansaugkanales und des Verbrennungsraumes angereichert werden muß (fettes Gemisch, Lambda < 1). Auch die Verwirbelung des Kraftstoffes mit der angesaugten Luft ist im kalten Zustand der Brennkraftmaschine schlecht. Der Lambda-Wert bewegt sich hier zwischen 0,8 und 0,85. Die Abgase der Brennkraftmaschine haben eine relativ niedrige Temperatur und hohe Schadstoffanteile, insbesondere von CO und HC.

Bei der erfindungsgemäß ausgebildeten Vorrichtung wird, wie erwähnt, nur im kalten Zustand der Brennkraftmaschine Sekundärluft in den Ansaugkanal eingeführt und damit das Luft-Kraftstoff-Gemisch abgemagert, was zu einer Abgasreinigung, d.h. Senkung des Anteiles von CO, NOx und HC, führt. Durch eine hohe Fließgeschwindigkeit der Sekundärluft aus der Sekundärluftdüse wird eine starke Verwirbelung und eine starke Abmagerung des Gemisches erreicht. Da die Lambda-Sonde und Katalysator bis zur Erreichung ihrer Wirkungstemperatur (ca. 250-350 °C) noch keine Funktion haben, werden die Schadstoffe im Abgas erheblich gesenkt. Durch das abgemagerte Gemisch werden die Verbrennungstemperatur erhöht und das Aufheizen der Lambda-Sonde und des Katalysators beschleunigt. Bei entsprechend abgestimmter Kaltlaufregelung (Einstellung des Luftmengenreglers) ist eine besonders große Verringerung der Abgasschadstoffe erzielbar. Insgesamt werden somit eine erhebliche Schadstoffminderung nach dem Kaltstart, eine Schonung des Katalysators und im Kurzstreckenverkehr ein geringerer Kraftstoffverbrauch erreicht.

Die Voreinstellung des maximalen Durchtrittsquerschnittes der Sekundärluftkammer des Luftmengenreglers erfolgt vorzugsweise manuell über eine Einstellschraube, und zwar abhängig vom Brennkraftmaschinentyp (Kfz-Typ).

Vorzugsweise ist die die Sekundärluftzufuhr sperrende Einrichtung von der Betriebstemperatur (Kühlwassertemperatur) der Brennkraftmaschine gesteuert. Die entsprechende Kühlwassertemperatur beträgt hierbei etwa 40-50 °C. Diese Temperatur entspricht dem Wirkungsbeginn von Lambda-Sonde und Katalysator bzw. überlappt diesen Wirkungsbeginn geringfügig. Hierdurch wird sichergestellt, daß die erfindungsgemäß ausgebildete Vorrichtung bei Wirkungsbeginn von Lambda-Sonde und Katalysator abgeschaltet wird. Bei Warmlauf der Brennkraftmaschine wird daher die Abgasreinigung bzw. Abgasentgiftung über den Lambda-Regelkreis mit Katalysator vorgenommen.

Bei einer weiteren Ausführungsform der Erfindung ist die die Sekundärluftzufuhr sperrende Einrichtung von der Abgastemperatur der Brennkraftmaschine im Bereich des Katalysators gesteuert. Diese Abgastemperatur liegt etwa bei 250-350 °C. Auch diese Temperatur entspricht dem Wirkungsbeginn von Lambda-Sonde und Katalysator bzw. überlappt diesen Wirkungsbeginn geringfügig. Ist dieser Temperaturbereich erreicht, wird die Abgasreinigung bzw. Abgasentgiftung über den Lambda-Regelkreis mit Katalysator vorgenommen.

Die Ausbildung der Sekundärlufteinführungsdüse ist nicht kritisch und an sich bei derartigen Sekundäreinführungssystemen bekannt. Auch der Sekundärluftmengenregler kann auf verschiedene Weise ausgebildet sein. Wesentlich ist nur, daß hiermit der Durchtrittsquerschnitt einer Sekundärluftkammer von einem Steuerelement (Kolben, Membran etc.) gesteuert wird, und zwar über Unterdruck, der vorzugsweise über eine Unterdruckzuführleitung einer entsprechenden Steuerkammer zugeführt wird. Der Unterdruck wird aus dem Ansaugkanal der Brennkraftmaschine abgegriffen, so daß die in den Ansaugkanal eingeführte Sekundärluftmenge vom im Ansaugkanal herrschenden Unterdruck abhängig ist.

Bei einer speziellen Ausführungsform der Erfindung sperrt die die Sekundärluftzufuhr sperrende Einrichtung die vom Sekundärluftmengenregler zur Düse führende Sekundärluftleitung. Es gelangt somit keine Sekundärluft mehr in den Ansaugkanal, wenn die Betriebsphase von Lambda-Sonde und Katalysator beginnt. Die die Sekundärluftzufuhr sperrende Einrichtung kann hierbei so ausgebildet sein, daß kein abruptes Sperren der Sekundärluftleitung erfolgt, sondern diese Leitung langsam zugesteuert wird, um einen abrupten Übergang bei Beginn der Betriebsphase von Lambda-Sonde und Katalysator zu vermeiden.

Bei einer weiteren Ausführungsform wirkt die die Sekundärluft sperrende Einrichtung direkt oder indirekt auf das Steuerelement des Sekundärluftmengenreglers ein. Mit anderen Worten, hierbei bewirkt die Einrichtung, daß das Steuerelement bei Beginn der Betriebsphase von Lambda-Sonde und Katalysator den Durchtrittsquerschnitt der Sekundärluftkammer im Sekundärluftmengenregler vollständig sperrt, so daß ebenfalls keine Sekundärluft mehr in den Ansaugkanal eingeführt werden kann. Auch hierbei erfolgt der Sperrvorgang vorzugsweise nicht abrupt, sondern in langsamer angepaßter Weise. Wenn die erfindungsgemäß ausgebildete Vorrichtung eine mit dem Ansaugkanal und dem Sekundärluftmengenregler in Verbindung stehende Unterdruckzuführleitung zur Beaufschlagung des Steuerelementes aufweist, sperrt die die Sekundärluftzufuhr sperrende Einrichtung vorzugsweise die Unterdruckzuführleitung zum Sekundärluftmengenregler. Hierdurch sperrt das Steuerelement den Durchtrittsquerschnitt der Sekundärluftkammer im Sekundärluftmengenregler, wobei ebenfalls vorzugsweise ein langsamer und angepaßter Sperrvorgang erfolgt.

Was die Ausbildung der die Sekundärluftzufuhr sperrenden Einrichtung anbetrifft, so handelt es sich bei dieser vorzugsweise um ein von einem Temperaturfühler gesteuertes Ventil. Der Temperaturfühler fühlt dabei vorzugsweise die Kühlwassertemperatur der Brennkraftmaschine oder die Abgastemperatur im Bereich des Katalysators ab. Das Ventil wirkt, wie vorstehend ausgeführt, vorzugsweise auf die Sekundärluftzuleitung zum Ansaugkanal, das Steuerelement des Sekundärluftmengenreglers oder die zum Sekundärluftmengenregler führende Unterdruckleitung ein.

Bei einer besonders bevorzugten Ausführungsform ist die die Sekundärluftzufuhr sperrende Einrichtung ein in eine Verbindung der Unterdruckzuführleitung zur Atmosphäre geschaltetes Thermoventil. Das Thermoventil kann dabei vorzugsweise von der Kühlwassertemperatur der Brennkraftmaschine oder der Abgastemperatur im Bereich des Katalysators beeinflußt werden. Das Thermoventil dient zum Öffnen und Schließen dieser Atmosphärenverbindung und damit zum gesteuerten Belüften der Unterdruckzuführleitung, und zwar in Abhängigkeit von den genannten Temperaturen.

Bei einer ersten Ausführungsform wird bei der vorstehend erwähnten kritischen Kühlwassertemperatur (Wirkungsbeginn von Lambda-Sonde und Katalysator) die Atmosphärenverbindung der Unterdruckzuführleitung geöffnet, so daß die Leitung belüftet und somit der Durchtrittsquerschnitt der Sekundärluftkammer des Luftmengenreglers gesperrt wird.

Bei einer zweiten Ausführungsform schließt das Thermoventil bei der kritischen Kühlwassertemperatur die Atmosphärenverbindung, so daß die Belüftung der Unterdruckzuführleitung gestoppt und auf diese Weise der Durchtrittsquerschnitt der Sekundärluftkammer gesperrt wird. Welche Variante letztendlich Verwendung findet, hängt von der Ausgestaltung des Luftmengenreglers ab, die für den Fachmann der Steuer- und Regeltechnik aufgrund seines Fachwissens realisiert werden kann.

In Weiterbildung der Erfindung ist in der Unterdruckzuführleitung ein Unterdruckbegrenzungsventil angeordnet. Bei diesem Begrenzungsventil kann es sich beispielsweise um eine kalibrierte Bohrung mit engem Durchlaßquerschnitt in der Unterdruckzuführleitung handeln. Der aus dem Ansaugkanal stammende Unterdruck muß daher diese kalibrierte Bohrung (Düse) zur Beaufschlagung des Steuerelementes im Sekundärluftmengenregler passieren. Hierdurch wird eine zu starke Unterdruckbeaufschlagung und somit eine Einführung einer zu großen Sekundärluftmenge vermieden. Das Unterdruckbegrenzungsventil befindet sich in der Unterdruckzuführleitung zwischen der Abzweigstelle der Atmosphärenverbindung und der Unterdruckabgriffstelle im Ansaugkanal.

Die erfindungsgemäß ausgebildete Vorrichtung ist sowohl für eine Brennkraftmaschine (Kraftfahrzeugmotor) mit Zentraleinspritzung als auch für eine solche mit Einzeleinspritzung geeignet. Im erstgenannten Fall findet vorzugsweise eine einzige Sekundärluftdüse Verwendung, die im gemeinsamen Ansaugkanal für sämtliche Zylinder angeordnet ist. Im an zweiter Stelle genannten Fall ist in jedem Ansaugstutzen eine Sekundärluftdüse vorgesehen, wobei vorzugsweise ein zentraler Luftmengenregler sämtliche Sekundärluftdüsen versorgt.

Bei der Einzeleinspritzung oder auch bei Verwendung eines elektronisch geregelten Vergasers wird die Sekundärluftdüse vorzugsweise mit einer Flanschplatte zwischen dem Gemischaufbereiter und dem Ansaugstutzen (Ansaugkanal) angeordnet. Der Steuerdruck für den Sekundärluftmengenregler wird dabei an einer beliebigen Stelle am Ansaugstutzen abgegriffen.

Bei einer Brennkraftmaschine mit Einzeleinspritzung sind die Sekundärluftdüsen vorzugsweise in der Nähe der Einspritzdüsen direkt in den zugehörigen Ansaugstutzen angeordnet.

Die Erfindung wird nachfolgend anhand von Ausführungsbeispielen in Verbindung mit der Zeichnung im einzelnen erläutert. Es zeigen:
- Figur 1: eine Schemadarstellung einer an einer Brennkraftmaschine mit Zentraleinspritzung angeordneten Vorrichtung zur Zuführung von Sekundärluft;
- Figur 2: eine Schemadarstellung einer an einer Brennkraftmaschine mit Einzeleinspritzung angeordneten Vorrichtung zur Zuführung von Sekundärluft;
- Figur 3: eine Schemadarstellung einer weiteren Ausführungsform einer an einer Brennkraftmaschine angeordneten Vorrichtung zur Zuführung von Sekundärluft; und
- Figur 4: eine Schemadarstellung einer vierten Ausführungform einer an einer Brennkraftmaschine angeordneten Vorrichtung zur Zuführung von Sekundärluft.

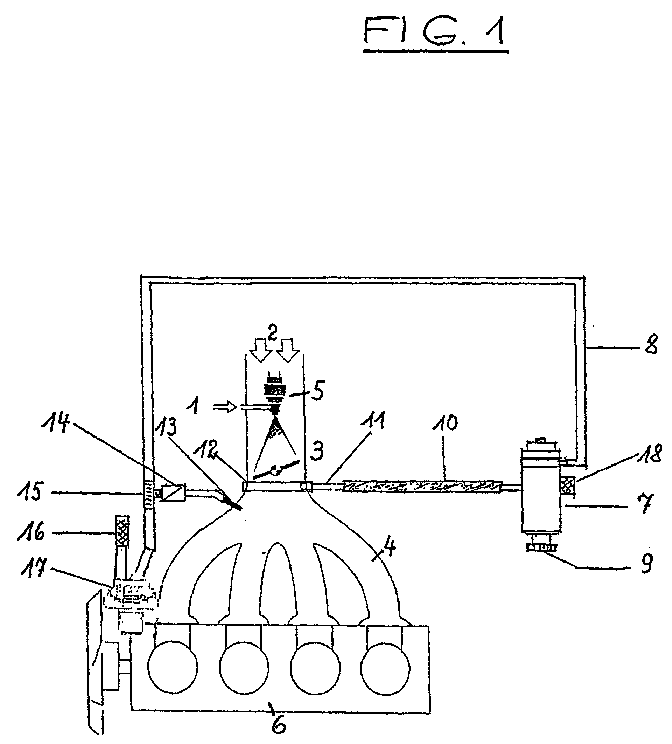

Figur 1 zeigt eine Brennkraftmaschine 6 in der Form eines Kraftfahrzeugmotors (Otto-Motors), der vier Zylinder aufweist, denen über vier Saugrohre 4, die in einen gemeinsamen Ansaugkanal münden, Luft-Kraftstoff-Gemisch zugeführt wird. Dieses Gemisch wird im gemeinsamen Ansaugkanal erzeugt, und zwar über eine Kraftstoffzufuhr 1, die zu einem im Ansaugkanal angeordneten Einspritzventil 5 führt. Mit 2 ist die Luftzufuhr bezeichnet. Stromab des Einspritzventiles 5 befindet sich eine Drosselklappe 3.

Die Vorrichtung zur Zuführung von Sekundärluft in den Ansaugkanal umfaßt eine Sekundärlufteinführungsdüse 12, welche sich auf einer Flanschplatte 11 befindet, die in den Ansaugkanal stromab der Drosselklappe 3 eingesetzt ist. Die Sekundärlufteinführungsdüse weist ein oder mehrere Düsenöffnungen auf, über die Sekundärluft in den Ansaugkanal einströmt und das Luft-Kraftstoff-Gemisch abmagert.

An die Sekundärlufteinführungsdüse 12 ist eine Sekundärluftleitung 10 in der Form eines Schlauches angeschlossen. Das andere Ende der Sekundärluftleitung 10 steht mit einer Sekundärluftkammer eines Sekundärluftmengenreglers 7 in Verbindung. Diese Sekundärluftkammer des Sekundärluftmengenreglers 7 steht ferner über ein Luftfilter 18 mit der Atmosphäre in Verbindung. Der Durchtrittsquerschnitt der Sekundärluftkammer wird über ein bewegliches Steuerelement gesteuert. Über eine Einstellschraube 9 kann der Hub dieses Steuerelementes eingestellt werden. In die Steuerkammer zur Betätigung des Steuerelementes mündet eine Unterdruckleitung 8, mittels der das Steuerelement mit Unterdruck beaufschlagt wird. Je nach Unterdruckbeaufschlagung wird das Steuerelement auf- und abbewegt und steuert somit auf diese Weise den Durchtrittsquerschnitt der Sekundärluftkammer im Sekundärluftmengenregler.

Die Unterdruckleitung 8 führt über ein T-Stück 15 und ein Unterdruckbegrenzungsventil 14 zu einer Unterdruckabgriffsstelle 13 am Ansaugkanal. Der im Ansaugkanal herrschende Unterdruck wird somit über die Abgriffsstelle 13 und das Unterdruckbegrenzungsventil 14 der Steuerkammer des Sekundärluftmengenreglers zugeführt.

Die Unterdruckleitung 8 weist ferner über das T-Stück 15 eine Verbindung mit der Atmosphäre auf. Diese Atmosphärenverbindung ist an ihrem Ende mit einem Luftfilter 16 versehen. In die Atmosphärenverbindung ist ein Thermoventil 17 geschaltet, das die Atmosphärenverbindung steuert, d.h. öffnet bzw. schließt. Das Auf- und Zusteuern der Atmosphärenverbindung wird vom Thermoventil 17 in Abhängigkeit von der Kühlwassertemperatur der Brennkraftmaschine 6 bewerkstelligt. Das Thermoventil 17 ist daher so am Motorblock befestigt, daß die Kühlwassertemperatur ein Steuerelement (Bimetallstreifen) des Thermoventiles beeinflußt, das durch die Temperaturbeeinflussung eine Formänderung erfährt und auf diese Weise den Durchtrittsquerschnitt der Atmosphärenverbindung öffnet bzw. schließt.

Das Thermoventil ist dabei so eingestellt, daß es bei Wirkungsbeginn eines Lambda-Regelkreises und eines Katalysators der Brennkraftmaschine die Unterdruckzufuhr zum Sekundärluftmengenregler so steuert, daß dieser den Durchtrittsquerschnitt der Sekundärluftkammer sperrt, so daß keine Sekundärluft mehr in den Ansaugkanal eingeführt wird. Die Funktionsweise der Vorrichtung wird somit bei Wirkungsbeginn des Lambda-Regelkreises und des Katalysators gestoppt. Natürlich kann hier ein gewisser Überlappungsbereich vorgesehen sein, so daß die Vorrichtung erst dann gestoppt wird, nachdem eine bestimmte Zeitdauer ab Wirkungsbeginn des Lambda-Regelkreises und des Katalysators verstrichen ist.

Die vorstehend beschriebene Vorrichtung funktioniert in der folgenden Weise:

Bei Kaltstart des Motors befinden sich dessen Lambda-Regelsystem und Katalysator nicht in Betrieb. Das im Ansaugkanal gebildete Luft-Kraftstoff-Gemisch wird in die Brennkammern der Zylinder gesaugt. Das Thermoventil 17 hält in diesem Zustand die Verbindung zur Atmosphäre geschlossen, so daß Unterdruck aus dem Ansaugkanal abgegriffen und über die Leitung 8 der Steuerkammer des Sekundärluftmengenreglers zugeführt werden kann. Das mit Unterdruck beaufschlagte Steuerelement öffnet den Durchtrittsquerschnitt der Sekundärluftkammer, so daß Sekundärluft über die Leitung 10 und die Sekundärzuführdüse 11 in den Ansaugkanal einströmen kann. Auf diese Weise wird das zugeführte Luft-Kraftstoff-Gemisch abgemagert.

Wenn der Wirkungsbeginn des Lambda-Regelsystems und Katalysators erreicht ist (bei einer Kühlwassertemperatur von etwa 40-50 °C) öffnet das Thermoventil 17 die Verbindung zur Atmosphäre, so daß die Unterdruckleitung 8 über das T-Stück 15 belüftet wird. Hierdurch wird der Durchtrittsquerschnitt der Sekundärluftkammer im Sekundärluftmengenregler 7 geschlossen, so daß keine Sekundärluft mehr in den Ansaugkanal eingeführt wird. Von diesem Zeitpunkt an wird daher die Abgasreinigung über das Lambda-Regelsystem und den Katalysator durchgeführt.

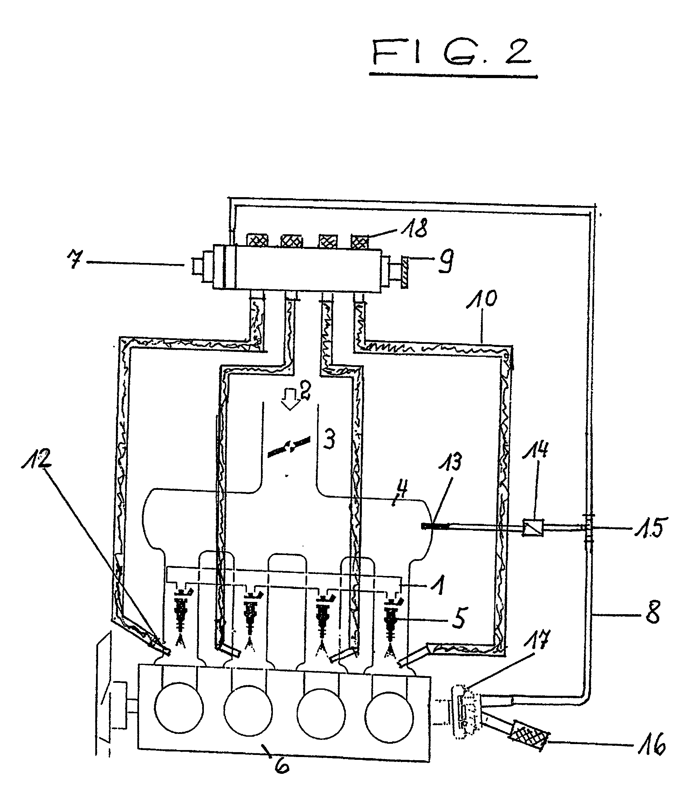

In Figur 1 ist eine Brennkraftmaschine mit Zentraleinspritzung gezeigt. Figur 2 zeigt eine Brennkraftmaschine mit Einzeleinspritzung, die mehrere Einspritzventile 5 aufweist, die jeweils in einem Ansaugstutzen eines Zylinders angeordnet sind. Die Vorrichtung zur Zuführung von Sekundärluft ist bei dieser Ausführungsform im wesentlichen identisch ausgebildet wie bei der Ausführungsform der Figur 1, mit dem einzigen Unterschied, daß hierbei mehrere Einspritzdüsen 12 vorgesehen sind, die jeweils in einem Ansaugstutzen eines Zylinders in der Nähe der Einspritzdüse angeordnet sind. Der Sekundärluftmengenregler hat bei dieser Ausführungsform vier Sekundärluftleitungen 10, die zu den einzelnen Düsen führen. Die Funktionsweise der Vorrichtung entspricht im übrigen der von Figur 1.

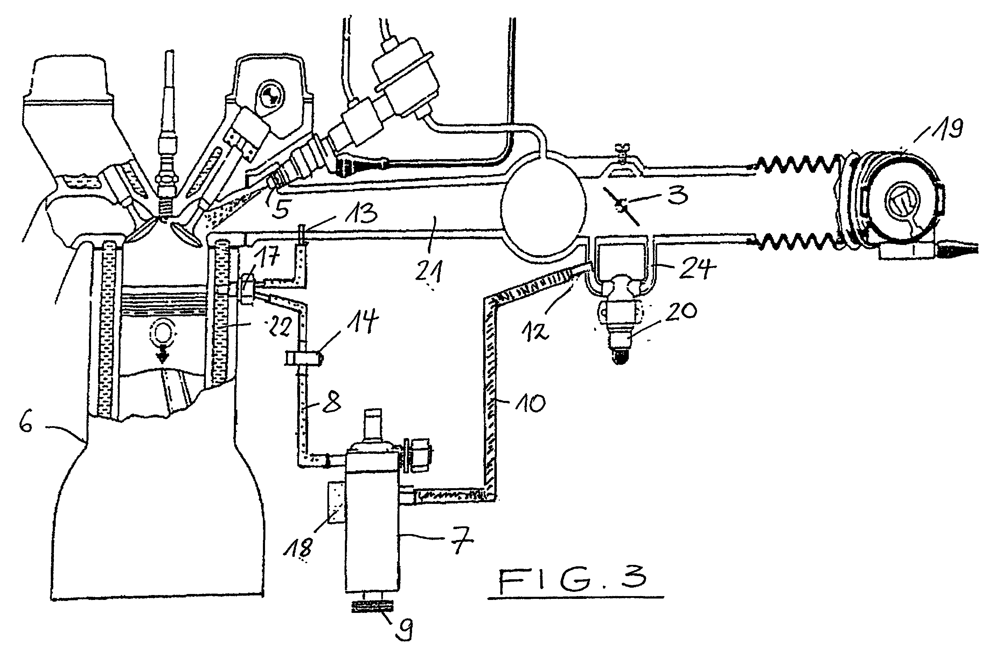

Figur 3 zeigt eine weitere Ausführungsform einer an einer Brennkraftmaschine angeordneten Vorrichtung zur Zuführung von Sekundärluft. Bei dieser Ausführungsform sind für gleiche Teile wie bei den Ausführungsformen der Figuren 1 und 2 gleiche Bezugszeichen verwendet. Auf diese Teile wird im einzelnen nicht mehr eingegangen.

Bei der Ausführungsform der Figur 3 mündet die Sekundärluftdüse 12 in einen die Drosselklappe 3 umgehenden Bypasskanal 24, in dem ein Leerlaufsteller 20 angeordnet ist. Eine bekannte LH-Jetronic 19 ist dem Ansaugkanal 21 zugeordnet. Eine Einspritzdüse 5 befindet sich an einer dem Einlaßventil benachbarten Stelle des Ansaugkanales 21.

Die Vorrichtung zur Zuführung von Sekundärluft ist bei dieser Ausführungsform im wesentlichen mit der der Figuren 1 und 2 identisch ausgebildet. Allerdings handelt es sich hierbei bei dem Thermoventil 17 um ein Schließventil, das die von der Abgriffsstelle 13 ausgehende Unterdruckleitung 8 mehr oder weniger sperrt. Auch bei dieser Ausführungsform befindet sich ein Unterdruckbegrenzungsventil (Unterdruckregler) 14 in der Unterdruckleitung 8, das bei Betriebsbeginn der Lambda-Sonde eine langsame Umschaltung derselben bewirkt.

Der Leerlaufsteller 20 legt die Leerlaufdrehzahl fest.

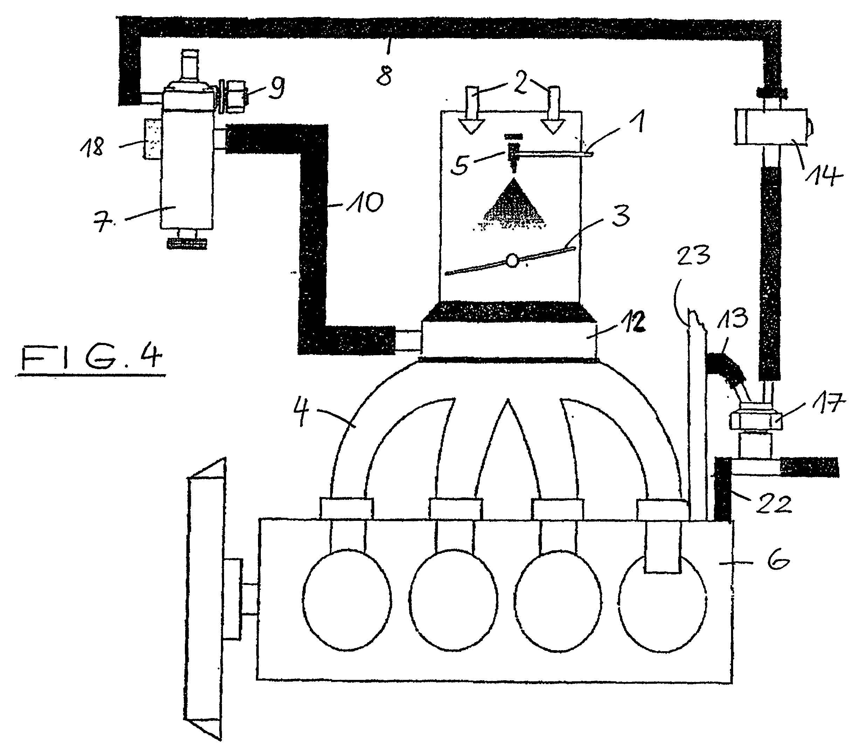

Die Ausführungsform der Figur 4 entspricht im wesentlichen der der Figur 1. Auch hier dienen gleiche Bezugszeichen zur Bezeichnung von gleichen oder ähnlichen Teilen, auf die im einzelnen nicht mehr eingegangen wird.

Das hier verwendete Thermoventil 17 ist ebenfalls als Schließventil ausgebildet und befindet sich in der Unterdruckleitung 8, die von einer Unterdruckabgriffsstelle 13 ausgeht, welche den Unterdruck aus einer zur Bremse führenden Leitung 23 abgreift. Das Thermoventil 17 steht in Kontakt mit einem Wasseranschluß 22 für den Kühlmantel des Motors 6. Demgegenüber steht das Thermoventil 17 der Ausführungsform der Figur 3 in direktem Kontakt mit dem Kühlmantel 22.

## Patentansprüche

1. Vorrichtung zur Zuführung von Sekundärluft in den Ansaugkanal (4) einer Brennkraftmaschine (6), die eine über eine Lambda-Sonde geregelte Kraftstoffzuführung und einen Katalysator zur Abgasreinigung aufweist, mit
einer im Ansaugkanal (4) der Brennkraftmaschine (6) anbringbaren Düse (12) zur Sekundärlufteinführung,
einem Sekundärluftmengenregler (7), der eine mit der Atmosphäre und der Sekundärlufteinführdüse (12) in Verbindung stehende Sekundärluftkammer aufweist, deren Durchtrittsquerschnitt über ein vom Unterdruck im Ansaugkanal (4) beaufschlagtes Steuerelement gesteuert wird, und
einer die Sekundärluftzufuhr zum Ansaugkanal (4) bei Beginn der Betriebsphase von Lambda-Sonde und Katalysator sperrenden Einrichtung.

2. Vorrichtung nach Anspruch 1, **dadurch gekennzeichnet, daß** die die Sekundärluftzufuhr sperrende Einrichtung von der Betriebstemperatur z.B., Kühlwassertemperatur, der Brennkraftmaschine (6) gesteuert ist.

3. Vorrichtung nach Anspruch 1, **dadurch gekennzeichnet, daß** die die Sekundärluftzufuhr sperrende Einrichtung von der Abgastemperatur der Brennkraftmaschine (6) im Bereich des Katalysators gesteuert ist.

4. Vorrichtung nach einem der vorangehenden Ansprüche, **dadurch gekennzeichnet, daß** die die Sekundärluftzufuhr sperrende Einrichtung die vom Sekundärluftmengenregler (7) zur Düse (12) führende Sekundärluftleitung (10) sperrt.

5. Vorrichtung nach einem der Ansprüche 1 bis 3, **dadurch gekennzeichnet, daß** die die Sekundärluftzufuhr sperrende Einrichtung direkt oder indirekt auf das Steuerelement des Sekundärluftmengenreglers (7) einwirkt.

6. Vorrichtung nach einem der vorangehenden Ansprüche, **dadurch gekennzeichnet, daß** sie eine mit dem Ansaugkanal (4) und dem Sekundärluftmengenregler (7) in Verbindung stehende Unterdruckzuführleitung (8) zur Beaufschlagung des Steuerelementes aufweist.

7. Vorrichtung nach Anspruch 6, **dadurch gekennzeichnet, daß** die die Sekundärluftzufuhr sperrende Einrichtung die Unterdruckzuführleitung (8) zum Sekundärluftmengenregler (7) sperrt.

8. Vorrichtung nach einem der vorangehenden Ansprüche, **dadurch gekennzeichnet, daß** die die Sekundärluftzufuhr sperrende Einrichtung ein von einem Temperaturfühler gesteuertes Ventil ist.

9. Vorrichtung nach Anpsruch 8, **dadurch gekennzeichnet, daß** die die Sekundärluftzufuhr sperrende Einrichtung ein in eine Verbindung der Unterdruckzuführleitung (8) zur Atmosphäre geschaltetes Thermoventil (17) ist.

10. Vorrichtung nach einem der Ansprüche 6 bis 9, **dadurch gekennzeichnet, daß** in der Unterdruckzuführleitung (8) ein Unterdruckbegrenzungsventil (14) angeordnet ist.

11. Vorrichtung nach einem der vorangehenden Ansprüche für eine Brennkraftmaschine mit Einzeleinspritzung, **dadurch gekennzeichnet, daß** jeder Ansaugstutzen (4) eine Sekundärluftdüse (12) aufweist.

12. Vorrichtung nach Anspruch 11, **dadurch gekennzeichnet, daß** ein zentraler Luftmengenregler (7) sämtliche Sekundärluftdüsen (12) versorgt.

## Claims

1. A device for supplying secondary air into the intake manifold (4) of an internal combustion engine (6) including a fuel supply controlled by means of a lambda probe and a catalyzer for the purification of exhaust gases, said device comprising
a nozzle (12) adapted to be mounted in the intake manifold (4) of the internal combustion engine (6) for the introduction of secondary air,
a controller (7) for the amount of secondary air having a secondary air chamber connected to the atmosphere and to the nozzle (12) for the introduction of secondary air, the cross-section of said secondary air chamber being controlled by a control member applied by the vacuum in the intake manifold (4), and
means blocking the supply of secondary air to the intake manifold (4) at the begin of the operation phase of lambda probe and catalyzer.

2. The device according to claim 1, **characterized in that** the means blocking the supply of secondary air is controlled by the operation temperature of the internal combustion engine (6), for instance the cooling water temperature.

3. The device according to claim 1, **characterized in that** the means blocking the supply of secondary air is controlled by the exhaust gas temperature of the internal combustion engine (6) in the region of the catalyzer.

4. The device according to one of the preceding claims, **characterized in that** the means blocking the supply of secondary air blocks the secondary air conduit (10) extending from the controller (7) for the amount of secondary air to the nozzle (12).

5. The device according to one of the claims 1 to 3, **characterized in that** the means blocking the supply of secondary air directly or indirectly acts upon the control member of the controller (7) for the amount of secondary air.

6. The device according to one of the preceding claims, **characterized in that** it includes a vacuum supply conduit (8) connected to the intake manifold (4) and to the controller (7) for the amount of secondary air and serving for acting upon the control member.

7. The device according to claim 6, **characterized in that** the means blocking the supply of secondary air blocks the vacuum supply conduit (8) to the controller (7) for the amount of secondary air.

8. The device according to one of the preceding claims, **characterized in that** the means blocking the supply of secondary air is a valve controlled by a temperature sensor.

9. The device according to claim 8, **characterized in that** the means blocking the supply of secondary air is a thermal valve (17) disposed in a connection of the vacuum supply conduit (8) to the atmosphere.

10. The device according to one of the claims 6 to 9, **characterized in that** a vacuum limiting valve (14) is disposed in the vacuum supply conduit (8).

11. The device according to one of the preceding claims for an internal combustion engine with individual injection, **characterized in that** each intake passage (4) has a secondary air nozzle (12).

12. The device according to claim 11, **characterized in that** a central controller (7) for the amount of secondary air supplies all the secondary air nozzles (12).

## Revendications

1. Dispositif pour l'apport d'air secondaire dans la conduite d'admission (4) d'un moteur à combustion (6), qui présente une alimentation en carburant réglée par une sonde lambda et un catalyseur pour l'épuration des gaz d'échappement, comprenant
une buse (12) pour l'introduction d'air secondaire applicable dans la conduite d'admission (4) du moteur à combustion (6),
un régulateur (7) de quantité d'air secondaire qui présente une chambre d'air secondaire se trouvant en communication avec l'atmosphère et la buse (12) pour l'introduction d'air secondaire et dont la section de passage est contrôlée par un élément de commande qui est affecté par la dépression dans la conduite d'admission (4)
un mécanisme bloquant l'apport d'air secondaire dans la conduite d'admission (4) au début de la phase de fonctionnement de la sonde lambda et du catalyseur.

2. Dispositif selon la revendication 1, **caractérisé en ce que** le mécanisme bloquant l'apport d'air secondaire est commandé par la température de fonctionnement, p. ex. la température de l'eau de refroidissement, du moteur à combustion (6).

3. Dispositif selon la revendication 1, **caractérisé en ce que** le mécanisme bloquant l'apport d'air secondaire est commandé par la température des gaz d'échappement du moteur à combustion (6) dans la région du catalyseur.

4. Dispositif selon une des revendications précédentes, **caractérisé en ce que** le mécanisme bloquant l'apport d'air secondaire bloque la conduite d'air secondaire allant du régulateur (7) de quantité d'air secondaire à la buse (12).

5. Dispositif selon une des revendications 1 à 3, **caractérisé en ce que** le mécanisme bloquant l'apport d'air secondaire agit directement ou indirectement sur l'élément de commande du régulateur (7) de quantité d'air secondaire.

6. Dispositif selon une des revendications précédentes, **caractérisé en ce qu'**il présente une conduite d'alimentation (8) à dépression se trouvant en communication avec la conduite d'admission (4) et le régulateur (7) de quantité d'air secondaire pour agir sur l'élément de commande.

7. Dispositif selon la revendication 6, **caractérisée en ce que** le mécanisme bloquant l'apport d'air secondaire bloque la conduite d'alimentation (8) à dépression par rapport au régulateur (7) de quantité d'air secondaire.

8. Dispositif selon une des revendications précédentes, **caractérisé en ce que** le mécanisme bloquant l'apport d'air secondaire est une soupape commandée par une sonde thermique.

9. Dispositif selon la revendication 8, **caractérisé en ce que** le mécanisme bloquant l'apport d'air secondaire est une soupape thermique (17) montée dans une connexion de la conduite d'alimentation (8) à dépression avec l'atmosphère.

10. Dispositif selon une des revendications 6 à 9, **caractérisé en ce que** la soupape de limitation de la dépression (14) est disposée dans la conduite d'alimentation (8) à dépression.

11. Dispositif selon une des revendications précédentes pour un moteur à combustion avec une injection unique, **caractérisé en ce que** chaque tubulure d'admission (4) présente une buse (12) d'air secondaire.

12. Dispositif selon la revendication 11, **caractérisé en ce qu'**un régulateur (7) central de quantité d'air alimente toutes les buses (12) d'air secondaire.
